# DEMANDE DE BREVET EUROPEEN

(11) **EP 3 235 696 A1**
(43) Date de publication de la demande: **25.10.2017**
(21) Numéro de dépôt: 17166693.6
(22) Date de dépôt: 14.04.2017
(51) Int. Cl.: B60T 7/20, B60T 13/24, B60T 11/10, B60T 8/34

(54) **DISPOSITIF DE COMMANDE D'UN FREIN D'UNE REMORQUE**

(30) Priorité: 18.04.2016 FR 1653405
(71) Demandeur: STE AGRIEST, 70360 Scey-sur-Saone et Saint-Albin (FR)
(72) Inventeur: CAMUS, Benoît, 70800 BOURGUIGNON LES CONFLANS (FR)
(74) Mandataire: Novagraaf Technologies

(57) **Abrégé**

L'invention concerne un dispositif de commande (1) apte à agir sur un frein d'une remorque reliée à un véhicule tracteur, ledit dispositif comprenant
- un premier vérin (11) étant agencé de manière à agir sur une came (21) liée au frein;
- un deuxième vérin (12) coopérant avec le premier vérin (11) ;
- un réseau d'acheminement (10) d'un fluide sous pression,
- un organe accumulateur (13) relié au deuxième vérin (12) ;

Selon l'invention, les premier et deuxième vérins (11, 12) sont alimentés en fluide sous pression par un conduit d'alimentation (105) commun du réseau d'acheminement (10). Par ailleurs, l'organe accumulateur (13) présente deux états :
- un premier état déformé élastiquement où le deuxième vérin (12) est rempli de fluide sous pression et où des pistons correspondants des premier et deuxième vérins (11, 12) ne sont pas en contact, et
- un deuxième état au repos où le deuxième vérin (12) est vide et où des pistons correspondants des premier et deuxième vérins (11, 12) sont en contact.

## Description

### Domaine technique

La présente invention se rapporte aux systèmes de freinage utilisés pour des remorques reliées à un véhicule tracteur, notamment un tracteur agricole. Particulièrement, l'invention concerne un dispositif de commande agissant sur un frein de la remorque.

### Etat de la technique

Il existe deux types de dispositif de commande de frein d'une remorque : un pneumatique et un hydraulique. Selon la réglementation de chaque pays, le type de dispositif de commande est choisi en fonction de la vitesse potentielle du véhicule tracteur agricole. A titre d'exemple, en France, un dispositif de commande hydraulique de frein est utilisé pour les véhicules tractés pouvant rouler à une vitesse maximum de 25 km/h. Entre 25 km/h et 40 km/h, un dispositif de commande pneumatique doit être utilisé.

Le choix d'un dispositif doit être fait au moment de la fabrication de la remorque, ce qui fait qu'une remorque conçue pour avoir un dispositif hydraulique ne peut pas être modifiée. Ainsi, sur une remorque donnée, un utilisateur ne peut pas remplacer un dispositif hydraulique par un dispositif pneumatique et vice versa.

Par conséquent, un utilisateur, au moment de l'achat, choisit plutôt une remorque équipée d'un dispositif de commande pneumatique car celle-ci peut rouler à deux tranches de vitesse (inférieure et supérieure). Cependant, puisque un dispositif pneumatique coûte plus cher qu'un dispositif hydraulique, l'utilisateur doit payer beaucoup plus pour acheter la remorque équipée d'un dispositif pneumatique.

Il est connu, dans l'état de la technique, un dispositif de commande à actionnement hydraulique comprenant un premier vérin alimenté par un premier conduit hydraulique et un deuxième vérin de sécurité alimenté par un deuxième conduit hydraulique. Lorsque le premier vérin est rempli de fluide sous pression, il agit sur une came reliée au frein de la remorque afin de la freiner. En cas d'accident tel que la rupture de l'attache de la remorque et l'arrachement des conduits, le fluide sous pression est expulsé hors du deuxième vérin qui actionne à son tour le premier vérin pour freiner la remorque.

Cependant, un tel dispositif avec deux conduits hydrauliques différents est encombrant et difficile à installer sur une remorque.

### Objectifs de l'invention

Ainsi, l'invention a notamment pour objectif de palier tout ou partie des inconvénients de l'état de la technique.

Un objectif de l'invention est de proposer un dispositif de commande à actionnement fluidique compact, peu coûteux et simple à mettre en place.

Un autre objectif de l'invention est de fournir un dispositif de commande standard qui peut tout aussi bien être chargé par liquide sous pression (à actionnement hydraulique) ou par air comprimé (à actionnement pneumatique).

Dans le présent document, on entend par « mode dynamique » le freinage du véhicule tracteur et de la remorque au cours de leur déplacement. On entend par « mode stationnement » le freinage du véhicule tracteur et de la remorque lors du stationnement de ceux-ci.

Par ailleurs, on entend par « conduit » un ou plusieurs tubes communiquant entre eux par lequel ou lesquels s'écoule le fluide sous pression. En outre, on entend par « conduit d'alimentation » un conduit qui dirige le fluide sous pression venant du véhicule tracteur vers le dispositif de commande de l'invention. Le fluide sous pression, selon ce document, englobe de l'air comprimé et un liquide sous pression, notamment de l'huile.

### Description de l'invention

Avec ces objectifs en vue, l'invention a pour objet un dispositif de commande apte à agir sur un frein d'une remorque reliée à un véhicule tracteur. Le dispositif de commande selon l'invention comprend :
- un premier vérin comprenant un premier piston coulissant dans un premier cylindre et le premier piston étant agencé de manière à agir sur une came liée au frein;
- un deuxième vérin coopérant avec le premier vérin; le deuxième vérin comprenant un deuxième piston coulissant dans un deuxième cylindre ;
- un réseau d'acheminement d'un fluide sous pression,
- un organe accumulateur relié au deuxième vérin, ledit organe accumulateur présentant deux états :
   - un premier état déformé élastiquement où le deuxième vérin est rempli de fluide sous pression, et
   - un deuxième état au repos où le deuxième vérin est vide.

Selon l'invention, les premier et deuxième vérins sont alimentés en fluide sous pression par un conduit d'alimentation commun du réseau d'acheminement. Par ailleurs, l'organe accumulateur présente deux états : un premier état déformé élastiquement et un deuxième état au repos. Dans le premier état de l'organe accumulateur, le deuxième vérin est rempli de fluide sous pression et les premier et deuxième pistons ne sont pas en contact. Dans le deuxième état de l'organe accumulateur, le deuxième vérin est vide et les premier et deuxième pistons sont en contact.

Ainsi, le conduit d'alimentation commun entre le premier et le deuxième vérins est le seul chemin amenant le fluide sous pression vers les deux vérins. L'installation du dispositif de commande avec un seul conduit d'alimentation est donc simple à réaliser.

En outre, l'agencement particulier du premier vérin et du deuxième vérin permet, dans certains modes de freinage, un contact physique et une action mécanique résultant de ce contact entre le premier piston et le deuxième piston. Puisque le premier piston est conçu pour agir sur la came du frein, l'action mécanique entre le premier piston et le deuxième piston commande le freinage de la remorque de manière rapide, efficace et fiable.

Selon une caractéristique de l'invention, le réseau d'acheminement comprend un premier tube d'alimentation relié au véhicule tracteur, un deuxième tube débouchant dans le premier vérin, et un troisième tube débouchant dans le deuxième vérin. Ces trois tubes sont reliés à un organe d'asservissement ayant deux positions :
- une première position met en relation le premier tube avec le deuxième tube, les premier et deuxième tubes constituant le conduit d'alimentation commun,
- une deuxième position met en relation le deuxième tube avec le troisième tube.

Ainsi, le fluide sous pression venant du véhicule tracteur est amené aux deux vérins quand l'organe d'asservissement est dans la première position. Il passe par le premier tube et le deuxième tube avant d'accéder au premier vérin.

Dans la deuxième position de l'organe d'asservissement, le fluide sous pression venant du troisième tube passe par l'organe d'asservissement pour rejoindre le deuxième tube. Le fluide revient ensuite dans le premier vérin.

Selon une autre caractéristique de l'invention, le fluide sous pression passe du premier vérin au deuxième vérin via un clapet anti-retour installé entre les deux vérins.

Ainsi, le fluide sous pression arrivant dans le deuxième vérin ne peut plus revenir dans le premier vérin.

Avantageusement, les premier et deuxième vérins sont montés en série.

Ainsi, le dispositif de commande est plus compact que celui de l'état de la technique. Il est donc plus facile à installer sur un cadre ou un essieu de la remorque grâce à un moyen de fixation adapté.

Selon une caractéristique de l'invention, l'organe accumulateur est constitué d'un ressort qui est comprimé dans le premier état et au repos dans le deuxième état.

On entend par «repos » une position initiale pour laquelle l'organe accumulateur n'est soumis à aucune contrainte mécanique.

Avantageusement, le ressort entoure le cylindre du deuxième vérin.

Les premier et deuxième vérins étant en série, la décompression du ressort fait avancer le piston du deuxième vérin de manière que celui-ci pousse sur le premier vérin. Par conséquent, le premier vérin, poussé vers l'avant, agit sur la came pour freiner des roues de la remorque.

Selon une caractéristique de l'invention, le dispositif de commande comprend un moyen de sécurité actionnant le frein en cas de décrochage de la remorque du tracteur.

Avantageusement, le moyen de sécurité est constitué d'un moyen de liaison reliant l'organe d'asservissement à une partie fixe du véhicule tracteur, ledit moyen de liaison actionnant ledit organe d'asservissement vers la deuxième position en cas de décrochage de la remorque du tracteur.

Ainsi, le fluide passe du deuxième vérin au premier vérin et le deuxième piston pousse le premier piston pour que celui-ci actionne la came pour freiner la remorque.

Selon une autre caractéristique de l'invention, l'organe d'asservissement est une vanne quart de tour.

La vanne quart de tour est peu coûteuse et simple à insérer dans le dispositif de commande.

Selon une caractéristique avantageuse mais facultative de l'invention, le premier cylindre du premier vérin et le deuxième cylindre du deuxième piston ont le même diamètre.

Ainsi, quand le dispositif passe du mode dynamique au mode stationnement, le volume de fluide remplissant le deuxième vérin va passer dans le premier vérin et comme il est identique au volume de fluide remplissant le premier vérin, la quantité de fluide utile est conservée dans le dispositif de commande. Celui-ci n'a donc pas besoin de réservoir de fluide en passant du mode dynamique au mode de stationnement.

Selon une caractéristique de l'invention, le dispositif de commande comprend un organe de réglage de l'organe d'accumulateur. A titre d'exemple, dans le cas où l'organe d'accumulateur est un ressort, l'organe de réglage peut exercer une force sur le ressort pour le compresser afin d'ajuster la puissance de freinage du dispositif de commande en fonction du type de remorque.

Selon une autre caractéristique de l'invention, le premier piston est relié à un organe de coopération mécanique avec la came liée au frein.

Selon une caractéristique de l'invention, les premier et deuxième vérins sont disposés coaxialement. La coaxialité des deux vérins permet une transmission optimale d'un effort d'un vérin à l'autre par une liaison mécanique, sans que l'ensemble soit alimenté par un fluide sous pression. Cela permet par conséquent d'avoir un fonctionnement mixte (mécanique et fluidique) du dispositif de commande dans un même bloc très compacte.

L'invention a également pour objet un système de frein hydraulique qui comprend un dispositif de commande selon l'invention et un frein à tambour ou à disque.

L'invention a aussi pour objet une remorque comprenant un dispositif de commande selon l'invention.

D'autres avantages pourront encore apparaître à l'homme du métier à la lecture des exemples ci-dessous, illustrés par les figures annexées, donnés à titre illustratif.

### Brève description des figures

- La figure 1 représente une vue en perspective d'un exemple de réalisation d'un dispositif de commande selon l'invention ;
- Les figures 2 et 3 représentent une vue en coupe d'un organe d'asservissement du dispositif de commande de la figure 1, respectivement en première position et en deuxième position,
- La figure 4 représente une vue en coupe d'un boîtier installé entre un premier vérin et un deuxième vérin du dispositif de commande de la figure 1,
- La figure 5 représente une vue en coupe de l'ensemble du premier vérin, du deuxième vérin et du boîtier avant le raccordement du dispositif de commande au véhicule tracteur,
- La figure 6 représente la même vue que la figure 5 avec le premier vérin rempli de fluide sous pression,
- La figure 7 représente l'ensemble de la figure 5 lors du déplacement de la remorque,
- La figure 8 représente l'ensemble de la figure 5 avec les premier et deuxième vérins remplis de fluide sous pression.
- La figure 9 représente l'ensemble de la figure 5 lors du stationnement de la remorque ou lors du décrochage de la remorque du véhicule tracteur ;
- La figure 10 représente une partie d'un organe de réglage d'un organe d'accumulateur du dispositif de commande selon les figures précédentes ;
- La figure 11 représente une vue en perspective de l'ensemble du premier vérin, du deuxième vérin et du boîtier illustré aux figures 5 à 9.

Dans la description ci-dessous, les références mises en gras renvoient à la liste des références présentée à la fin de la description.

### Description détaillée de l'invention

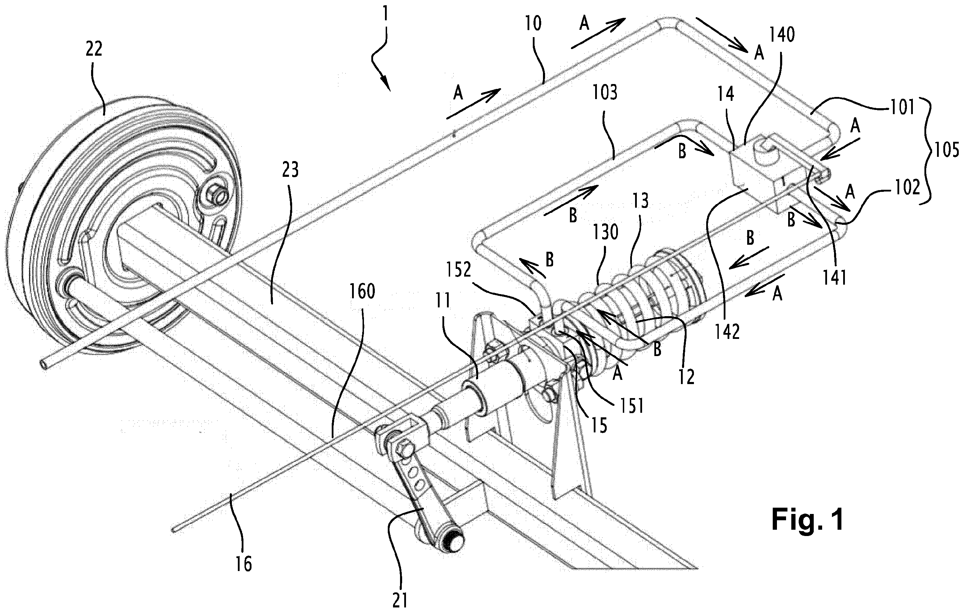

La figure 1 illustre un dispositif de commande 1 installé sur un essieu 23 d'une remorque. Le dispositif de commande 1 agit sur une came 21 pour freiner des roues 22 de la remorque. Ce dispositif 1 comprend un réseau d'acheminement 10 en fluide sous pression, un premier vérin 11 et un deuxième vérin 12. Le fluide sous pression est envoyé dans le dispositif de commande 1 lorsqu'un utilisateur appui sur une pédale de frein (non illustré) du véhicule tracteur.

Le premier vérin 11 et le deuxième vérin 12 sont montés en série. Un boîtier 15 est interposé entre ces deux vérins afin de faciliter le montage. Le boîtier 15 comprend en outre des orifices 151 et 152.

Comme illustré à la figure 1, le réseau d'acheminement 10 comprend un premier tube d'alimentation 101 recevant du fluide sous pression venant du véhicule tracteur, un deuxième tube 102 relié au premier orifice 151 et un troisième tube 103 relié au deuxième orifice 152. Par ailleurs, ces trois tubes sont branchés à un organe d'asservissement 14. Dans cet exemple, l'organe d'asservissement 14 est une vanne quart de tour 140 comprenant une poignée 141 et un corps 142.

Le dispositif de commande 1 comprend en outre un moyen de sécurité 16. Dans cet exemple, le moyen de sécurité 16 est constitué d'un câble de rupture 160 qui relie la poignée 141 à une partie fixe du véhicule tracteur. Le câble de rupture 160 pend (n'est pas tendu) au cours du déplacement de la remorque. En cas d'accident, le décrochage de la remorque du véhicule tracteur tend le câble de rupture 160 qui entraîne en rotation la poignée 141 vers une deuxième position.

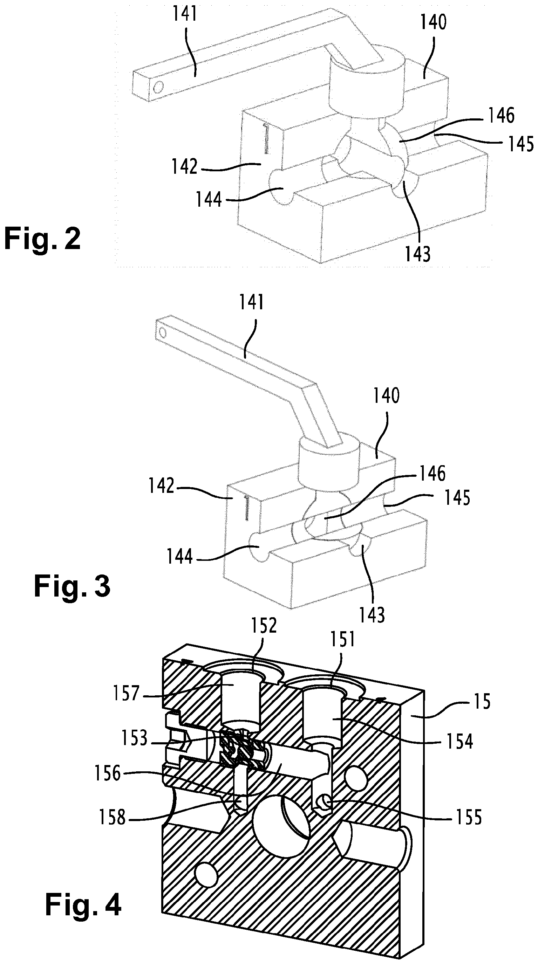

A la figure 2, de manière plus précise, la vanne quart de tour 140 comporte trois canaux 143, 144 et 145. Les premier 101, deuxième 102 et troisième 103 tubes sont branchés respectivement au premier 143, deuxième 144 et troisième 145 canaux. La vanne quart de tour 140 comporte en outre un obturateur 146 dirigé par la poigné 141.

La vanne quart de tour 140 étant en une première position, l'obturateur 146 coupe la connexion du troisième canal 145 aux deux premiers canaux 143 et 144. Par conséquent, du fluide sous pression venant du véhicule tracteur est dirigé directement vers le deuxième tube 102 via les premier 143 et deuxième 144 canaux.

A la figure 3, la vanne quart de tour 140 est en une deuxième position pour laquelle le deuxième et le troisième canaux 144, 145 communiquent. Cela permet donc un passage de fluide sous pression du troisième tube 103 vers le deuxième tube 102 via les troisième 145 et premier canaux 144.

La figure 4 représente la vue en coupe du boîtier 15 interposé entre le premier vérin 11 et le deuxième vérin 12. Le boîtier 15 comprend deux orifices 151 et 152. Le premier orifice 151 est relié au deuxième tube 102 alors que le deuxième orifice 152 est relié au troisième tube 103.

Le premier orifice 151 donne accès à un premier tunnel 154 au bout duquel se trouve une première ouverture 155 débouchant dans un premier cylindre 111 du premier vérin 11. Par ailleurs, le premier tunnel 154 est perpendiculaire à un deuxième tunnel 156 qui est lui-même perpendiculaire à un troisième tunnel 157. Les premier et troisième tunnels 154, 157 sont donc parallèles entre eux.

Le deuxième orifice 152 est relié au troisième tunnel 157 au bout duquel se trouve une deuxième ouverture 158 débouchant dans un deuxième cylindre 121 du deuxième vérin 12.

Comme illustré à la figure 4, un clapet anti-retour 153 est installé au niveau du croisement entre le deuxième tunnel 156 et le troisième tunnel 157 de manière que le fluide sous pression venant du premier tunnel 154, une fois qu'il est dans le troisième tunnel 157, ne peut plus revenir au premier tunnel 154.

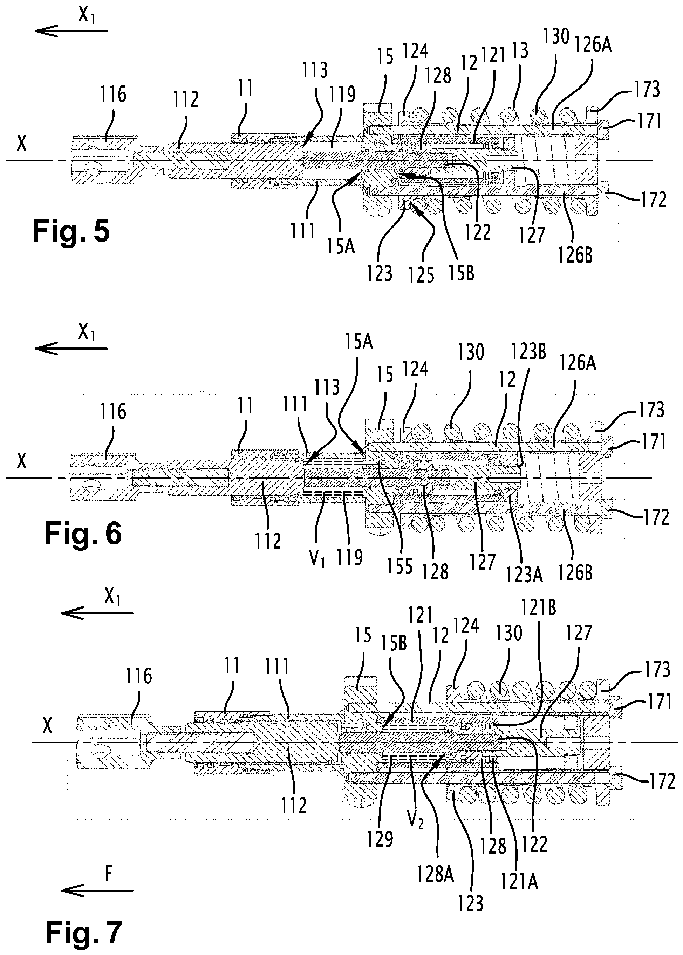

La figure 5 montre l'agencement entre le premier vérin 11 et le deuxième vérin 12 avant le raccordement du dispositif de commande 1 au véhicule tracteur ou quand la remorque est stationné.

Le premier vérin 11 comprend un premier piston 112 coulissant dans le premier cylindre 111. Le premier piston 112 est relié à un organe de coopération avec la came 21, dans cet exemple une chape de tige 116. Bien entendu, un homme du métier peut utiliser d'autres organes de coopération mécanique avec la came 21 reliée au frein. Ainsi, le freinage des roues de la remorque est réalisé par l'action mécanique et directe du premier vérin 11 sur la came 21.

Le premier cylindre 111 est fixé au boîtier 15 par soudure, cette liaison est réalisée de manière étanche pour éviter des fuites de fluide sous pression.

Le deuxième vérin 12, ou concrètement le deuxième cylindre 121 du deuxième vérin 12 est également fixé par soudure au boîtier 15 mais à la face arrière 15B de celui-ci de manière que les premier et deuxième pistons 112 et 122 soient agencés coaxialement. Le premier vérin 11 et le deuxième vérin 11 sont donc coaxiaux.

Ainsi, grâce à cet assemblage fixe du premier cylindre 111 et du deuxième cylindre 121 au boîtier 15, l'ensemble du premier vérin 11, du deuxième vérin 12 et du boîtier 15 forme un dispositif monobloc à double vérin. Un tel dispositif est compact et facile à installer sur une remorque.

Pour faciliter la compréhension de l'invention, nous considérons que les premier 112 et deuxième pistons 122 coulissent selon un axe X. Les termes « avant » et « arrière » correspondent respectivement à la partie gauche et à la partie droite de la figure 5 telle que présentée.

Le deuxième vérin 12 comprend deux tiges de support 126A et 126B qui sont disposés symétriquement de part et d'autre de l'axe X. Un organe accumulateur 13 entoure les deux tiges de support 126A et 126B. Dans cet exemple, l'organe accumulateur 13 est un ressort 130.

Un coussinet 123, disposé entre le boîtier 15 et le ressort 130, coulisse selon l'axe X le long des tiges de support 126A et 126B. Le coussinet 123 présente une collerette 124. Le ressort 130 s'appuie sur la surface arrière 125 de la collerette 124.

De cette manière, lorsque le coussinet 123 déplace en translation dans le sens inverse d'une flèche X₁ ou vers l'arrière, il compresse le ressort 130.

Un embout 127 en forme de tige est en contact sur le coussinet 123. Précisément, l'embout ou tige 127 est engagé d'une part de manière fixe dans un trou traversant 123B réalisé sur un fond 123A du coussinet 123 et est solidarisé d'autre part avec le deuxième piston 122 par vissage. Le deuxième piston 122 porte la tête de piston 128. Ainsi, lors du déplacement vers l'arrière du coussinet 123, celui-ci entraîne l'embout 127, la tête de piston 128 et le deuxième piston 122 en translation dans le sens opposé à la flèche X₁.

Le deuxième cylindre 121 est fixé, dans cet exemple par soudage, à la face arrière 15B du boîtier 15 et disposé entre les deux tiges de support 126A et 126B. Le deuxième cylindre 121 enveloppe la tête de piston 128, l'embout 127 et le deuxième piston 122. Le deuxième cylindre 121, au niveau de son extrémité arrière, est fermé par un obturateur 121 A. Celui-ci comprend un orifice 121 B à travers lequel coulisse l'embout 127. L'orifice 121 B du deuxième cylindre 121 et le trou traversant 123B du coussinet 123 sont alignés. La tête de piston 128, l'embout 127 et le deuxième piston 122 sont mobiles en translation suivant l'axe X par rapport au deuxième cylindre 121.

En absence du fluide sous pression dans les deux vérins 11 et 12, le deuxième piston 122, sous l'effort du ressort 130, s'appuie sur le premier piston 112. Le ressort 130, tel qu'illustré à la figure 5, est dans un état de repos dans lequel le premier piston 112 et la chape de tige 116 sont dans leur position avancée. La chape de tige 116, dans une telle position, agit sur la came 21 de manière qu'elle écarte les mâchoires d'un frein à tambour (non illustrée) associé à la roue 22 de la remorque. La roue 22 est donc bloquée et la remorque arrêtée.

Lors de la première utilisation, après que le dispositif de commande 1 est raccordé au véhicule tracteur, un utilisateur appuie plusieurs fois sur une pédale de frein pour amorcer ledit dispositif au freinage. Le but de cette phase de préparation est de remplir le deuxième cylindre 121 en fluide sous pression. La vanne quart de tour 140 est mise en première position.

Par l'appui de l'utilisateur sur la pédale de frein, une pompe conduit le fluide sous pression vers la vanne quart de tour 140 via le premier tube d'alimentation 101. La vanne quart de tour 140, étant en première position, dirige le fluide sous pression vers le deuxième tube 102. Le fluide sous pression atteint donc dans un premier temps le premier cylindre 111 via le premier orifice 151, le premier tunnel 154 et la première ouverture 155. Le sens de circulation du fluide sous pression dans ce cas est illustré par des flèches référencée A à la figure 1.

Le fluide sous pression remplit le premier cylindre 111 jusqu'à un chargement complet de ce dernier comme illustré à la figure 6.

Il est à noter que, dans la configuration selon la figure 6, le premier cylindre 111, la face arrière 113 du premier piston 112 et la face avant 15A du boîtier 15 délimitent une première chambre de remplissage 119 du fluide sous pression. Dans cette configuration, le premier vérin 11 est rempli de fluide sous pression dont le volume V₁ est égal au volume de la première chambre de remplissage 119 moins le volume occupé par une partie du deuxième piston 122 dans ladite première chambre 119. Le volume V₁ de fluide remplissant le premier vérin 11 est appelé ci-après le premier volume V₁ de fluide.

Une fois le premier cylindre 111 rempli, le fluide sous pression passe par le deuxième tunnel 156 et le clapet anti-retour 153 pour accéder au deuxième cylindre 121. Autrement dit, le deuxième vérin 12 est alimenté en fluide sous pression via le premier vérin 11. La pression exercée par le fluide à la tête de piston 128 fait coulisser celle-ci et le deuxième piston 122 dans le sens opposé à la flèche X₁. Ils entraînent ainsi le coussinet 123 vers l'arrière qui comprime le ressort 130. De cette manière, le ressort 130 passe de l'état de repos à un état déformé élastiquement. Selon l'invention et dans cet exemple, le ressort 130 est comprimé pendant son état déformé élastiquement.

Dès que le deuxième vérin 12 est rempli de fluide sous pression, l'utilisateur libère la pédale de frein. Le fluide emprunte le même chemin d'arrivée, à savoir par les premier et deuxième tubes 101 et 102, pour revenir au véhicule tracteur. Il n'y a donc plus de fluide dans le premier vérin 11. En revanche, le fluide dans le deuxième vérin 12 y est maintenu par le clapet anti-retour 153 et la vanne quart de tour 140.

Comme illustré à la figure 7, le deuxième vérin 12 est rempli de fluide sous pression. De façon identique au premier vérin 11, le deuxième cylindre 121 du deuxième vérin 12, la face avant 128A de la tête de piston 128 et la face arrière 15B du boîtier 15 délimitent une deuxième chambre de remplissage 129. Dans cette configuration, le deuxième vérin 12 est rempli de fluide sous pression dont le volume V₂ est égal au volume de la deuxième chambre de remplissage 129 moins le volume occupé par une partie du deuxième piston 122 dans ladite deuxième chambre 129. Le volume V₂ de fluide remplissant le deuxième vérin 12 est appelé ci-après le deuxième volume de fluide.

En absence du fluide sous pression et de l'appui exercé par le deuxième piston 122, le premier piston 112 et la chape de tige 116, sous l'effort d'un ressort de rappel (non illustré) lié à la came 21, se déplacent suivant une flèche F opposé à la flèche X1. La chape de tige 116, en reculant, fait pivoter la came 21 dans le sens des aiguilles d'une montre. La came 21 n'exerce plus de force sur les mâchoires du frein et la roue est donc libre en rotation. Le dispositif de commande 1, dans l'état représenté à la figure 7, a libéré le frein, la remorque est donc prêt à rouler.

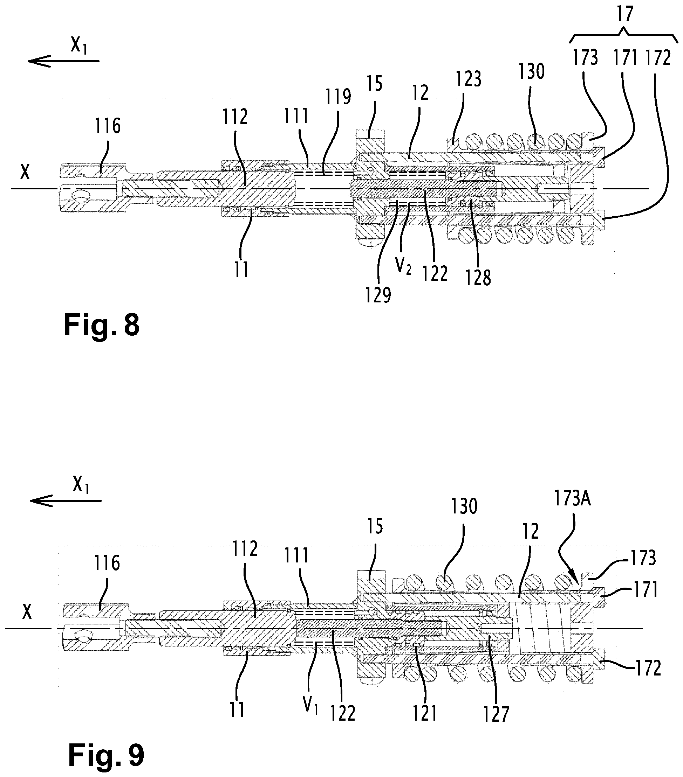

La figure 8 montre le dispositif de commande lors d'un freinage en mode dynamique. La vanne quart de tour 140 est toujours en première position. Au moment du freinage, l'utilisateur appuie sur la pédale de frein. Du fluide sous pression arrive donc dans le premier vérin 11 comme expliqué précédemment. Le remplissage du fluide sous pression dans le premier vérin 11 fait avancer le premier piston 112 ainsi que la chape de tige 116. Cette dernière, en se déplaçant vers l'avant, fait pivoter la came 21 dans le sens trigonométrique, ce qui fait écarter les mâchoires du frein à tambour (non illustrée) associé à la roue 22. La remorque est donc freinée.

Quand l'utilisateur libère la pédale de frein, le fluide dans le premier vérin 11 revient au véhicule tracteur par le deuxième tube 102 et le premier tube 101. Le premier piston 112 et la chape de tige 116 sont de nouveau en position reculée et la roue 22 de la remorque est de nouveau libre à tourner. Les premier et deuxième vérins 11, 12 reviennent en position illustrée à la figure 7.

Tout au long le freinage en mode dynamique, le deuxième vérin 12 est rempli du fluide sous pression de deuxième volume V₂. Le ressort 130 reste toujours dans l'état déformé élastiquement et dans cet exemple le ressort 130 reste comprimé.

La figure 9 montre la configuration du dispositif de commande 1 lors du freinage en mode stationnement. Pour stationner la remorque avec le véhicule tracteur, l'utilisateur coupe le premier tube d'alimentation 101 du véhicule tracteur en mettant la vanne quart de tour 140 en deuxième position. Les deuxième et troisième tubes 102 et 103 communiquent.

Dans le deuxième vérin 12, le deuxième piston 122, sous l'effort de décompression du ressort 130, avance dans le sens de la flèche X₁. Le fluide sous pression dans le deuxième cylindre 121 est donc poussé à sortir via la deuxième sortie 158, le troisième tunnel 157 et le deuxième orifice 152. Puis, le fluide sous pression arrive dans le troisième tube 103 et rejoint le deuxième tube 102 en passant par la vanne 140. Le fluide sous pression revient ensuite dans le premier vérin 11. Le sens de circulation du fluide sous pression dans ce cas est illustré par des flèches référencées B à la figure 1.

Puisqu'il n'y a plus d'arrivée de nouveau fluide sous pression du véhicule tracteur, le fluide venant du deuxième vérin 12 reste dans le premier vérin 11. Ainsi, le premier vérin est rempli de fluide sous pression de premier volume V₁.

Le deuxième vérin 12 étant vide, le ressort 130 agit sur le deuxième piston 122 en le poussant vers l'avant. Le deuxième piston 122 pousse à son tour le premier piston 112 vers l'avant, ce qui met la chape de tige 116 en position avancée. La roue est freinée par le même principe expliqué précédemment. Le freinage en mode stationnement est dû à l'appui du deuxième piston 122 sur le premier piston 112.

En cas de décrochage accidentel de la remorque du véhicule tracteur, comme décrit dans les paragraphes précédents, le câble de rupture 160 se tend et il fait tourner la poignée 141 afin de mettre la vanne quart de tour 140 en deuxième position. Le troisième tube 103 communique avec le deuxième tube 102.

Ainsi, le fluide sous pression du deuxième vérin 12, sous l'effort du ressort 130, est chassé vers l'extérieur des vérins à travers le troisième tube 103 et le deuxième tube 102. Dans le deuxième vérin 12, le ressort 130 est décompressé et il fait avancer le deuxième piston 122 selon la flèche X₁ de manière à pousser le premier piston 112. La chape de tige 116 est donc mise en position avancée. Elle actionne la came 21 pour freiner la remorque. Les premier et deuxième vérins 11, 12 ont la même configuration représentée à la figure 9.

Le freinage en mode de stationnement et en cas de décrochage accidentel de la remorque est réalisé par le deuxième piston 122 qui pousse le premier piston 112 vers l'avant, suivant la flèche X1, sous l'effet de la décompression du ressort. En d'autres termes, l'effort du ressort est transmis au premier piston 112 par l'intermédiaire du deuxième piston 122. Le deuxième piston 122, en poussant le premier piston 112, agit mécaniquement sur celui-ci. Ainsi, le freinage, dans ces deux modes, est réalisé grâce à une action mécanique directe du deuxième vérin 12 sur le premier vérin 11. Un tel freinage est encore appelé freinage mécanique. Il est à remarquer que dans l'exemple illustré aux figures 5 à 9, le diamètre du premier cylindre 111 et le deuxième cylindre 121 sont identiques. Cela a pour avantage que le premier volume V₁ du premier vérin 11 et le deuxième volume V₂ du deuxième vérin 12 restent identiques. Ainsi, quand le dispositif passe du mode dynamique au mode stationnement, le fluide remplissant le deuxième volume V₂ va passer dans le premier volume V₁ et comme ces deux volumes sont identiques, la quantité de fluide est conservée dans le dispositif de commande 1. Celui-ci n'a donc pas besoin de réservoir de fluide en passant du mode dynamique au mode de stationnement.

Par ailleurs, le dispositif de commande 1 selon l'invention et dans cet exemple, comprend un organe 17 de réglage de l'organe de l'accumulateur, ici le ressort 130. Il s'agit de deux vis de réglages 171 et 172 coopérant avec une bague 173, le tout installé vers l'arrière des tiges de support 126A et 126B.

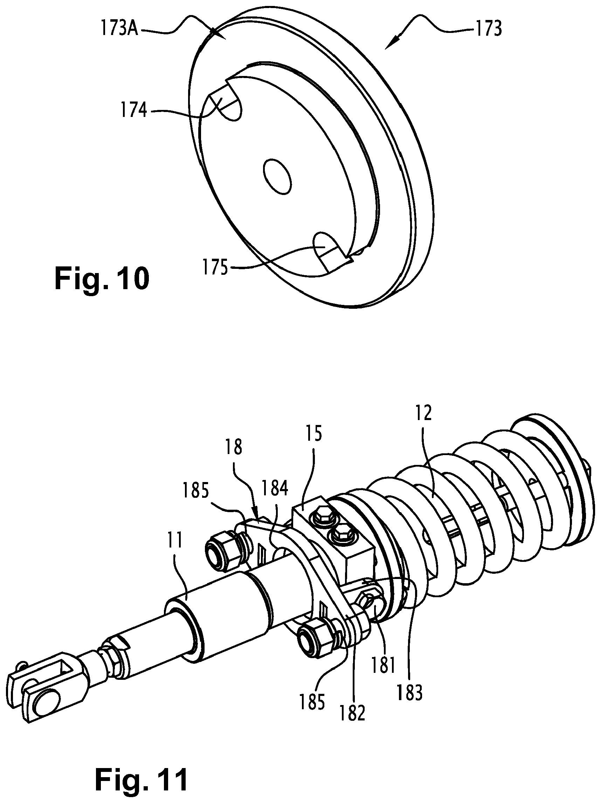

Comme illustré à la figure 10, la bague 173 comprend deux orifices 174 et 175 disposés de manière symétrique par rapport à son centre. Les vis de réglages 171 et 172 sont engagés respectivement dans les orifices 174 et 175 mais du côté opposé aux tiges 126A et 126B. Les vis de réglage 171 et 172 est relié respectivement aux tiges de support 126A et 126B par vissage. Dans cet exemple, les vis de réglage 171 et 172 comprennent chacun un alésage axial interne tandis que les tiges 126A et 126B sont filetées à leur extrémité recevant les vis de réglage 171 et 172.

Le diamètre extérieur des vis de réglage 171 et 172 correspond à celui des orifices 174 et 175 de la bague 173 de sorte qu'ils sont tenus ensemble par friction. La bague 173, une fois montée à l'arrière des tiges 126A et 126B comprend une face avant 173A qui est en contact avec le ressort 130.

De cette manière, lorsque l'on tourne les vis de réglage 171 et 172 dans un sens ou dans le sens opposés, celles-ci sont déplacées suivant un axe parallèle à l'axe X vers l'avant ou vers l'arrière. Ils emmènent la bague 173 selon cette même direction. Dans cet exemple, si les vis de réglages 171 et 172 sont tournées de manière à faire déplacer la bague 173 vers l'avant, ce dernier exerce sur le ressort 130 une force de compression.

De cette manière, au moment du freinage mécanique, à savoir le freinage réalisé suite à l'appui du deuxième piston 122 sur le premier piston 112, la force de compression exercée sur le ressort 130 par la bague 173 est ajoutée à celle résultant du remplissage du deuxième vérin 12. Ainsi, la puissance de freinage du dispositif de commande 1 est augmentée suite au relâchement du ressort 130 davantage compressé.

En référence à la figure 11, une bride de fixation 18 est installée devant le boîtier 15 et fixée à celui au moyen des vis 181. La bride de fixation 18 comprend une plaque elliptique 182 et deux ailettes longitudinales 183 fixées au boîtier 15. La plaque elliptique 182 comprend une ouverture 184 et deux trous de vissage disposés symétriquement par rapport à l'ouverture 184. Ces deux trous de vissage permettent de fixer la bride de fixation 18, donc le dispositif de commande 1, à un support de la remorque. Le support peut comprendre une plaque verticale 19 telle qu'illustrée à la figure 1.

La bride de fixation 18 peut avoir a une dimension adaptée à tout type de support de vase de freinage pneumatiqueà un vase de freinage pneumatique de type T20 à T30, couramment utilisé dans des systèmes de freinage pour remorque. La distance entre les deux trous de vissage 185 de la bride de fixation 18 est par exemple de 120 mm et le diamètre de chaque trou peut être de 16,5 mm. Ainsi, dans ce cas, un utilisateur n'a donc pas besoin de modifier la structure de sa remorque pour installer le dispositif de commande de freinage selon l'invention au lieu et place d'un vase de freinage de type T20 à T30 précédemment utilisé.

Selon l'invention et dans l'exemple présenté précédemment, le fluide sous pression a un seul chemin d'arrivée. Celui-ci est constitué du premier tube 101 et du deuxième tube 102 communiquant entre eux. Le seul chemin d'arrivée est ainsi appelé le conduit d'alimentation commun 105 du premier vérin 11 et du deuxième vérin 12.

Le fait d'avoir un seul conduit d'alimentation commun simplifie l'installation du dispositif de commande 1 sur la remorque. De plus, grâce au montage en série des deux vérins, la structure générale du dispositif de commande 1 devient plus compacte.

En outre, le dispositif de commande selon l'invention permet de standardiser la fabrication des remorques. En effet, il peut fonctionner tout aussi bien avec du liquide sous pression que de l'air comprimé. Le dispositif de commande de l'invention peut donc avoir soit un actionnement hydraulique soit un actionnement pneumatique en une seule structure.

De plus, il n'est pas nécessaire d'avoir une réserve de fluide sous pression sur la remorque pour faire fonctionner le dispositif de commande une fois qu'il est dissocié du véhicule tracteur, ni un réservoir de récupération du fluide de vidange lors du passage du mode dynamique au mode stationnement ou vice versa. Cela permet un gain de place sur la remorque et une maintenance réduite du fait de la réduction des réseaux de fluides.

Enfin, le passage au mode stationnement est facilité puisqu'il se fait sans effort de l'utilisateur, par le simple actionnement d'une vanne.

Selon d'autres exemples de réalisation de l'invention, afin d'augmenter l'efficacité de freinage de la remorque, on peut installer plusieurs dispositifs de commande 1. Par exemple, on peut installer un dispositif de commande 1 pour chaque roue de la remorque. Une remorque peut comprendre deux ou quatre dispositifs de commande définis selon l'invention.

## Revendications

1. Dispositif de commande (1) apte à agir sur un frein d'une remorque reliée à un véhicule tracteur, ledit dispositif comprenant
- un premier vérin (11) comprenant un premier piston (112) coulissant dans un premier cylindre (111) et le premier piston (112) étant agencé de manière à agir sur une came liée au frein;
- un deuxième vérin (12) coopérant avec le premier vérin (11); le deuxième vérin (12) comprenant un deuxième piston (122) coulissant dans un deuxième cylindre (121) ;
- un réseau d'acheminement (10) d'un fluide sous pression,
- un organe accumulateur (13) relié au deuxième vérin (12) ;
ledit dispositif de commande étant **caractérisé en ce que**
- les premier et deuxième vérins (11, 12) sont alimentés en fluide sous pression par un conduit d'alimentation (105) commun du réseau d'acheminement (10) ; et
- l'organe accumulateur (13) présente deux états :
- un premier état déformé élastiquement où le deuxième vérin (12) est rempli de fluide sous pression et où les premier et deuxième pistons (112, 122) ne sont pas en contact, et
- un deuxième état au repos où le deuxième vérin (12) est vide et où les premier et deuxième pistons (112, 122) sont en contact.

2. Dispositif de commande (1) selon la revendications 1 **caractérisé en ce que** le réseau d'acheminement (10) comprend un premier tube d'alimentation (101), un deuxième tube (102) débouchant dans le premier vérin (11), et un troisième tube (103) débouchant dans le deuxième vérin (12), et que ces trois tubes sont reliés à un organe d'asservissement (14, 140) ayant deux positions :
- une première position met en relation le premier tube (101) avec le deuxième tube (102), les premier (101) et deuxième (102) tubes constituant le conduit d'alimentation (105) commun,
- une deuxième position met en relation le deuxième tube (102) avec le troisième tube (103).

3. Dispositif de commande (1) selon la revendication 1 ou la revendication 2 **caractérisé en ce que** le fluide sous pression passe du premier vérin (11) au deuxième vérin (12) via un clapet anti-retour (153) installé entre les deux vérins.

4. Dispositif de commande (1) selon l'une des revendications 1 à 3 **caractérisé en ce que** les premier et deuxième vérins (11, 12) sont montés en série.

5. Dispositif de commande (1) selon la revendication 4 **caractérisé en ce que** l'organe accumulateur (13) est constitué d'un ressort (130) qui est comprimé dans le premier état et décomprimé dans le deuxième état.

6. Dispositif de commande (1) selon l'une des revendications 2 à 5 **caractérisé en ce qu'**il comprend un moyen de sécurité (16) actionnant le frein en cas de décrochage de la remorque du tracteur.

7. Dispositif de commande (1) selon la revendication 6 **caractérisé en ce que** le moyen de sécurité (16) est constitué d'un moyen de liaison (160) reliant l'organe d'asservissement (14, 140) à une partie fixe du véhicule tracteur, ledit moyen de liaison (160) actionnant ledit organe d'asservissement (14, 140) vers la deuxième position en cas de décrochage de la remorque du tracteur.

8. Dispositif de commande (1) selon l'une des revendications 2 à 7 **caractérisé en ce que** l'organe d'asservissement (14) est une vanne quart de tour (140).

9. Dispositif de commande (1) selon l'une des revendications 1 à 8, **caractérisé en ce que** le premier cylindre (111) du premier vérin (11) et le deuxième cylindre (121) du deuxième vérin (12) ont le même diamètre.

10. Dispositif de commande (1) selon l'une des revendications 1 à 9, **caractérisé en ce qu'**il comprend un organe (17) de réglage de l'organe d'accumulateur (13).

11. Dispositif de commande (1) selon l'une des revendications précédentes, **caractérisé en ce que** les premier et deuxième vérins (11, 12) sont disposés coaxialement.

12. Système de frein hydraulique comprenant un dispositif de commande (1) selon l'une des revendications 1 à 11 et un frein à tambour ou un frein à disque.

13. Remorque comprenant un dispositif de commande (1) selon l'une des revendications 1 à 12.
